# EUROPEAN PATENT APPLICATION

(11) **EP 4 826 778 A1**
(43) Date of publication of application: **21.10.2026**
(21) Application number: 24904280.5
(22) Date of filing: 13.12.2024
(51) Int. Cl.: H01M 4/134, H01M 4/1395, H01M 4/38, H01M 4/40, H01M 4/04, H01M 10/052, H01M 10/42, H01M 4/02

(54) **LITHIUM METAL ELECTRODE FOR LITHIUM SECONDARY BATTERY AND METHOD FOR MAKING SAME**

(30) Priority: 15.12.2023 KR 20230183494
(71) Applicant: POSCO Holdings Inc., Pohang-si, Gyeongsangbuk-do 37859 (KR)
(72) Inventor: BAE, Hongyeul, Pohang-si, Gyeongsangbuk-do 37859 (KR); KIM, Jin Hong, Pohang-si, Gyeongsangbuk-do 37859 (KR); LEE, Garam, Pohang-si, Gyeongsangbuk-do 37859 (KR)
(74) Representative: Pfenning, Meinig & Partner mbB
(86) International application number: PCT/KR2024/020317
(87) International publication number: WO 2025/127715

(57) **Abstract**

The present invention relates to a lithium metal electrode and a method for manufacturing the same, wherein the lithium metal electrode of the present invention includes a current collector, a metal layer positioned on at least one surface of the current collector and including a lithium alloy, and a protective layer positioned on the metal layer and including first amorphous carbon having a specific surface area of 450 m²/g or more.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the price and increase the energy density of secondary batteries, it is indispensable to use a lithium metal electrode as a negative electrode of a lithium secondary battery. Specifically, all-solid-state batteries have recently attracted attention as next-generation batteries for high energy density, such as for electric vehicle (EV) applications.

Since an all-solid-state battery does not use a liquid electrolyte, the all-solid-state battery has various advantages, such as excellent safety, capability of high-voltage operation, improved energy density of a battery pack due to reduction of cooling- and safety-related auxiliary materials, and operability in a wide temperature range. In order to substantially implement high energy density in such an all-solid-state battery, a thick and low-capacity graphite-based negative electrode material should be replaced with thin and high-capacity lithium, and in view of economic feasibility and energy density, a thin-film lithium metal electrode having a thickness of substantially 10 µm to 20 µm is required.

In general, in the case of a lithium metal electrode, there is difficulty in technology for manufacturing lithium metal to be thin through a commercial process, and dendrite growth caused by nonuniform current density and electrochemical reactions during charging and discharging of a secondary battery has become a problem. This may induce continuous side reactions with an electrolyte and may lead to an internal short circuit in which a negative electrode and a positive electrode contact each other.

The growth of dendrites may cause serious problems in low lifespan characteristics and safety, and accordingly, there is difficulty in substantially utilizing an ultra-thin lithium metal negative electrode.

Various methods have been proposed as methods for increasing lifespan by suppressing the dendrites, but there is a problem in that it is difficult to simultaneously implement high energy density through thinning of lithium and sufficient lifespan characteristics. In order to solve the above problem, a method of using a protective layer on a lithium metal electrode has been proposed, but there is a problem in that a sufficient lithium stacking rate and charge/discharge lifespan characteristics cannot be obtained.

### [DETAILED DESCRIPTION OF THE INVENTION]

### [Technical Problem]

A lithium metal electrode for a lithium secondary battery according to one embodiment of the present invention is to provide a lithium secondary battery in which lithium ion conductivity is improved to increase a lithium stacking rate and charge/discharge lifespan characteristics are improved.

A method for manufacturing a lithium metal electrode for a lithium secondary battery according to another embodiment of the present invention is to provide a method for manufacturing a lithium metal electrode for a lithium secondary battery having the above-described advantages.

### [Technical Solution]

A lithium metal electrode according to one embodiment of the present invention may include a current collector, a metal layer positioned on at least one surface of the current collector and including a lithium alloy, and a protective layer positioned on the metal layer and including first amorphous carbon having a specific surface area of 450 m²/g or more. In one embodiment, the first amorphous carbon may have an average particle diameter D50 of 0.1 µm to 1.5 µm.

In one embodiment, the protective layer may further include second amorphous carbon having a lower specific surface area than the first amorphous carbon, and, based on 100 wt% of amorphous carbon in the protective layer, the first amorphous carbon may be 50 wt% or more, and the balance may include the second amorphous carbon. In one embodiment, the second amorphous carbon may have a specific surface area of 40 m²/g to 80 m²/g or less.

In one embodiment, the second amorphous carbon may have an average particle diameter D50 of 20 nm to 50 nm. In one embodiment, a difference value between the specific surface area of the first amorphous carbon and the specific surface area of the second amorphous carbon may be 400 m²/g to 700 m²/g.

In one embodiment, the protective layer may include micropores of the first amorphous carbon. In one embodiment, the micropores may be 10% to 40% based on 100% of the total pore volume. In one embodiment, the second amorphous carbon in the protective layer may include mesopores or macropores.

A method for manufacturing a lithium metal electrode according to another embodiment of the present invention includes preparing a current collector, forming a coating layer on at least one surface of the current collector using a coating composition including a lithiophilic component, and forming, on a surface of the coating layer, a protective layer including first amorphous carbon having a specific surface area of 450 m²/g or more. In one embodiment, after forming the protective layer, the method may include positioning, in a plating solution, the current collector on which the coating layer and the protective layer are formed, then positioning a lithium supply source at a predetermined distance from the protective layer, and applying current between the current collector and the lithium supply source to form a metal layer including a lithium alloy in which the lithiophilic component included in the coating layer and lithium deposited from the lithium supply source are alloyed.

In one embodiment, in the step of forming the protective layer, the first amorphous carbon may have an average particle diameter D50 of 0.1 µm to 1.5 µm. In one embodiment, in the step of forming the protective layer, second amorphous carbon having a lower specific surface area than the first amorphous carbon may be further mixed, and, based on 100 wt% of amorphous carbon in the protective layer, the first amorphous carbon may be 50 wt% or more, and the balance may include the second amorphous carbon.

In one embodiment, the second amorphous carbon may have a specific surface area of 40 m²/g to 80 m²/g or less. In one embodiment, the second amorphous carbon may have an average particle diameter D50 of 20 nm to 50 nm.

### [Advantageous Effects]

A lithium metal electrode for a lithium secondary battery according to one embodiment of the present invention provides a lithium secondary battery in which lithium ion conductivity is improved to increase a lithium stacking rate and charge/discharge lifespan characteristics are improved by including a protective layer including amorphous carbon having a large specific surface area.

A method for manufacturing a lithium metal electrode for a lithium secondary battery according to another embodiment of the present invention provides a method for manufacturing a lithium metal electrode for a lithium secondary battery having the above-described advantages.

### [BRIEF DESCRIPTION OF THE DRAWINGS]

FIGS. 1A and 1B show lithium metal electrodes manufactured according to one embodiment.
FIG. 2 is a schematic view of a method for manufacturing a lithium metal electrode of the present invention.
FIG. 3 is a scanning electron microscope (SEM) photograph showing a structure and a thickness of an alloy material coating layer plated on a current collector according to one embodiment of the present invention.
FIG. 4 shows surface and cross-sectional microstructures when a protective layer is disposed on a current collector coated with an alloy material according to one embodiment.
FIGS. 5A and 5B show appearances when lithium is electrodeposited according to Examples and Comparative Examples of the present invention.
FIGS. 6A and 6B show pore volume and cumulative porosity according to pore size of first amorphous carbon and second amorphous carbon used in Examples and Comparative Examples of the present invention.
FIG. 7 shows cell lifespan evaluation of all-solid-state batteries using Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

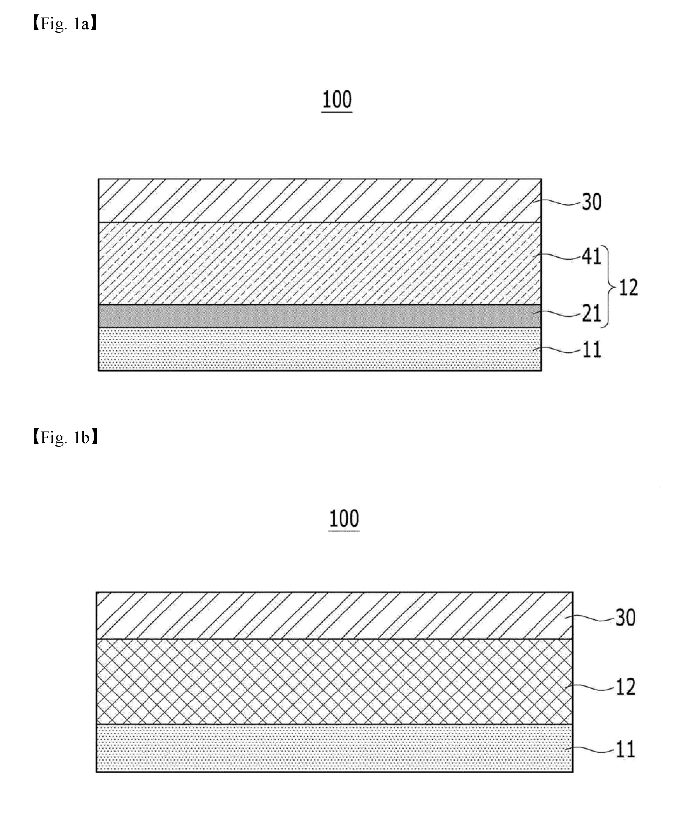

FIGS. 1A and 1B show a lithium metal electrode (100) manufactured according to one embodiment.

Referring to FIG. 1A, the lithium metal electrode (100) according to one embodiment includes a current collector (11) and a metal layer (12) positioned on at least one surface of the current collector (11), and further includes a protective layer (30) positioned on the other surface of the metal layer (12), the other surface facing the current collector (11).

The current collector (11) may be a member for electrical connection in a lithium secondary battery. The current collector (11) may have a form of a foil, but is not limited thereto, and may have, for example, a form of a mesh, foam, rod, wire, or a sheet obtained by weaving wires or fibers.

The current collector (11) may use a material having electrical conductivity and limited reactivity with lithium. Specifically, as a material of the current collector (11), for example, one of copper, nickel, titanium, stainless steel, iron, gold, platinum, silver, tantalum, ruthenium, alloys thereof, carbon, a conductive polymer, and composite fibers in which a conductive layer is coated on a non-conductive polymer, or a combination thereof, may be used.

In one embodiment, the current collector (11) may have a thickness of 1 µm to 50 µm. When the current collector (11) is excessively thick, battery weight increases, causing a problem of lowering energy density of the battery. When the current collector (11) is excessively thin, there is a risk of overheating and breakage during high-current operation, and the current collector may be damaged by tension during a battery manufacturing process.

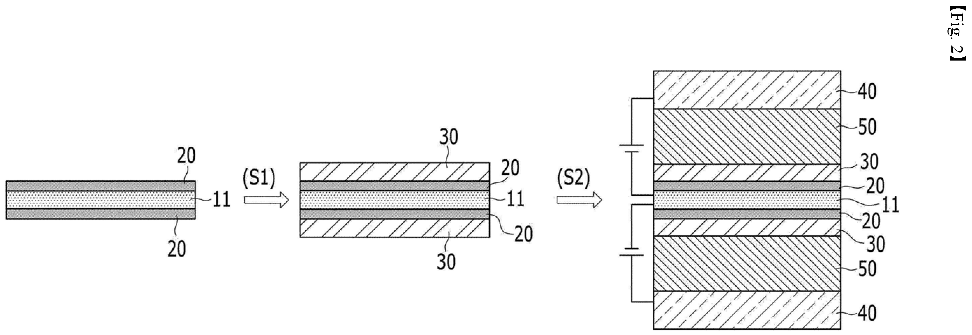

The metal layer (12) is positioned on the current collector (11), and may include a lithium alloy layer (21) including a lithium alloy and a lithium metal layer (41) positioned on the lithium alloy layer (21). The lithium alloy layer (21) may be a layer including a lithium alloy in which a lithiophilic component included in the metal layer (12) on the current collector (11) and lithium deposited from the lithium supply source (40) of FIG. 2 are alloyed by applying current between the current collector (11) and the lithium supply source.

When an electrodeposition process is performed by applying a high current in order to increase the electrodeposition rate when forming the metal layer (12), there is a problem in that performance of a lithium secondary battery deteriorates. However, when the metal layer (12) is formed in a structure including the lithium alloy layer (21) including a lithium component as in the present embodiment, even when the electrodeposition process is performed by applying a high current, it is possible to prevent excessive generation of fine lithium particles or destruction of the protective layer (30) positioned on the surface of the lithium metal layer (41) already generated in the electrodeposition process.

Specifically, since the metal layer (12) of one embodiment includes the lithium alloy layer (21) including a lithium component, when the lithium metal layer (41) is formed on the lithium alloy layer (21) by applying a high current in the electrodeposition process, initially generated lithium particles can be induced to grow well, thereby forming particles having a coarse structure and, at the same time, the lithium metal layer (41), and consequently the metal layer (12), can have a uniform surface.

Accordingly, performance, specifically charge/discharge characteristics, of a secondary battery to which the lithium metal electrode according to the present embodiment is applied can be remarkably improved. In addition, since a lithium metal electrode for a secondary battery having high performance can be manufactured even when an electrodeposition process is performed at a high speed by applying a high current, productivity of the lithium metal electrode for a secondary battery can also be remarkably improved.

In the present embodiment, the lithium alloy layer (21) includes a lithiophilic metal. When the lithium alloy layer (21) includes the lithiophilic metal as described above, since the lithium alloy layer (21) includes the lithiophilic metal having high electronic conductivity, electrons are smoothly supplied from the current collector and lithium ions are reduced, thereby advantageously facilitating electrodeposition of the lithium metal layer. The metal layer (12) serves to help lithium be more effectively deposited below the protective layer (30) during a charging process of the battery.

In one embodiment, the metal layer (12) may have a thickness of 1 µm to 100 µm, and more specifically 5 µm to 30 µm. When the metal layer (12) is excessively thick, when the lithium metal electrode of the present embodiment is applied to a secondary battery, weight and volume of the battery increase, thereby lowering energy density. In addition, since time and costs of the electrodeposition process increase in proportion to thickness when forming the metal layer (12), the thickness of the metal layer (12) is preferably 100 µm or less.

When the metal layer (12) is excessively thin, when the lithium metal electrode of the present embodiment is applied to a secondary battery, charge/discharge lifespan of the battery deteriorates. Specifically, during charging and discharging of the battery, lithium in the battery is gradually consumed due to side reactions between lithium included in the negative electrode active material layer, that is, the metal layer of the present invention, and an electrolyte solution, thereby reducing battery capacity, and the amount of retained lithium capable of supplementing lithium consumed during charging and discharging decreases, whereby charge/discharge lifespan of the battery deteriorates. Accordingly, the thickness of the metal layer (12) is preferably 1 µm or more.

The protective layer (30) is positioned on the metal layer (12), and may include first amorphous carbon. The first amorphous carbon may be amorphous carbon having a high specific surface area. Specifically, the first amorphous carbon may be 450 m²/g or more. Specifically, the first amorphous carbon may be 500 m²/g or more, more specifically 500 m²/g to 800 m²/g, more specifically 550 m²/g to 750 m²/g, and more specifically 550 m²/g to 650 m²/g.

As the first amorphous carbon satisfies the specific surface area within the above-described range, there are advantageous effects in that lithium ion conduction through grain boundaries and pores is easy due to an effect of expanded specific surface area and inclusion of a large amount of fine micropores. When the first amorphous carbon is outside the upper limit of the above-described range, an excessive amount of binder or dispersant is required when forming a slurry, and a problem of nonuniform dispersibility occurs. When the first amorphous carbon is outside the lower limit of the above-described range, the surface area decreases, and thus conductivity of lithium ions moving mainly through the surface of the amorphous carbon decreases.

In one embodiment, the first amorphous carbon may have an average particle diameter D50 of 0.1 µm to 1.5 µm. The average particle diameter D50 of the first amorphous carbon may be a particle diameter corresponding to 50% by volume accumulation in a particle size distribution of the first amorphous carbon. Specifically, the average particle diameter D50 of the first amorphous carbon may be 0.3 µm to 1.2 µm. Specifically, the average particle diameter D50 of the first amorphous carbon may be 0.5 µm to 1.0 µm. More specifically, the average particle diameter D50 may be 0.6 µm to 1.0 µm.

As the average particle diameter D50 of the first amorphous carbon satisfies the above-described range, there is an advantage in stable dispersion of the slurry. When the average particle diameter D50 of the first amorphous carbon is outside the upper limit of the above-described range, the particle size becomes excessively large compared with the thickness of the protective coating layer, and thus the number of particles constituting the entire protective layer decreases, causing a problem in that lithium dendrite growth cannot be effectively prevented. When the average particle diameter D50 of the first amorphous carbon is outside the lower limit of the above-described range, there is a problem in that a large amount of micropores cannot be formed in amorphous carbon particles.

Specifically, the second amorphous carbon may have a specific surface area of 40 m²/g to 80 m²/g. Specifically, the second amorphous carbon may have a specific surface area of 50 m²/g to 70 m²/g.

As the second amorphous carbon satisfies the specific surface area within the above-described range, there is an advantage in that pores having an appropriate size can be formed. When the second amorphous carbon is outside the upper limit of the above-described range, there is a problem in that an excessive amount of binder or dispersant is required when forming a slurry. When the second amorphous carbon is outside the lower limit of the above-described range, the specific surface area excessively decreases, and thus conductivity of lithium ions moving through the surface decreases.

In one embodiment, based on 100 wt% of amorphous carbon in the protective layer (30), the protective layer (30) may include 50 wt% or more of the first amorphous carbon and the balance of the second amorphous carbon. Specifically, the content of the first amorphous carbon may be 60 wt% or more, and more specifically 80 wt% or more, based on 100 wt% of the amorphous carbon. As described above, based on 100 wt% of the total amount of amorphous carbon, specifically the first amorphous carbon and the second amorphous carbon, the content of the first amorphous carbon is greater than the content of the second amorphous carbon, thereby increasing a volume occupied by micropores in the total pores, increasing a specific surface area, and thus improving lithium ion conductivity. When the content of the first amorphous carbon is smaller than the content of the second amorphous carbon, since the proportion of micropores in the total pores is low, lithium ion conductivity moving through the surface of the micropores decreases, causing a problem of deteriorated lifespan characteristics of the battery.

In one embodiment, the second amorphous carbon may have an average particle diameter D50 of 20 nm to 50 nm. The average particle diameter D50 of the second amorphous carbon may be a particle diameter corresponding to 50% by volume accumulation in a particle size distribution of the second amorphous carbon. Specifically, the average particle diameter D50 of the second amorphous carbon may be 30 nm to 40 nm.

As the average particle diameter D50 of the second amorphous carbon satisfies the above-described range, when mixed with the first amorphous carbon, there is an advantage in that density of the protective layer is improved. When the average particle diameter D50 of the second amorphous carbon is outside the upper limit of the above-described range, there is a problem in that the specific surface area decreases due to an increase in particle size. When the average particle diameter D50 of the second amorphous carbon is outside the lower limit of the above-described range, there is a problem in that particles are excessively small and aggregation occurs, or dispersibility decreases when a slurry is prepared.

In one embodiment, a difference value between the specific surface area of the first amorphous carbon and the specific surface area of the second amorphous carbon may be 400 m²/g to 700 m²/g. Specifically, the value may be 500 m²/g to 600 m²/g.

As the difference value satisfies the above-described range, there is an advantage in that micropores and mesopores are appropriately mixed, and small particles effectively fill spaces between large particles, thereby improving density of the protective layer. When the difference value is outside the upper limit of the above-described range, particles having an excessively large specific surface area are included, causing problems of excessive use of binder or dispersant and dispersibility. When the difference value is outside the lower limit of the above-described range, the effect of increasing specific surface area is reduced, causing a problem in that the effect of improving lithium ion conductivity is reduced.

In one embodiment, the first amorphous carbon may include micropores, which are fine pores. The micropores are pores formed in the particles themselves and mean pores at a nm level.

Specifically, the first amorphous carbon may include micropores in an amount of 10% to 40% based on 100% of the total pore volume. Specifically, the micropores may be included in an amount of 13% to 35%, and more specifically 14.7% to 30%. In one embodiment, the micropores may have a size of 2 nm or less. Specifically, the micropores may have a diameter of 2 nm or less. By including micropores within the above-described range, the first amorphous carbon has a high specific surface area, and accordingly, there is an advantage in that conductivity of lithium ions conducted along fine micropores can be improved.

In one embodiment, the second amorphous carbon may include mesopores or macropores. Specifically, the mesopores are pores formed between particles and may have a size of 2 nm to 50 nm. The macropores are pores formed between particles and may have a size greater than 50 nm. The second amorphous carbon has a particle diameter of 50 nm or less, specifically 10 nm to 40 nm, and more specifically 20 nm to 40 nm, has few micropores formed in the particles themselves, and may include the mesopores or macropores formed between particles.

In one embodiment, when the protective layer includes both the first amorphous carbon and the second amorphous carbon, the fraction of micropores may satisfy 10% to 40% based on 100% of the total pore volume. The fraction of micropores is a factor determined by the content of the first amorphous carbon, and as the content of the first amorphous carbon increases, the fraction of micropores increases. As the protective layer includes micropores within the above-described range, there is an advantage in that lithium ion conductivity conducted along the surface of fine micropores can be improved.

When lithium metal is used as a negative electrode in an all-solid-state battery, a high resistance is generated by a reaction between an all-solid-state electrolyte and lithium, and lithium dendrites are continuously generated due to local nonuniformity of current density during charging and discharging, or high-resistance lithium by-products are generated, whereby failure occurs due to a short circuit or overvoltage during charging and discharging, or battery capacity decreases.

The lithium metal electrode according to one embodiment includes the protective layer including the first amorphous carbon, and thus can additionally improve structural safety as well as output characteristics and lifespan characteristics of the lithium metal electrode.

Specifically, the lithium metal electrode of the present embodiment includes the protective layer (30) including the first amorphous carbon, and thus the protective layer (30) can not only improve ionic conductivity, but also improve strength of the protective layer (30), and physically block dendrites during dendrite growth in the lithium electrode, thereby preventing a short circuit between electrodes and improving charge/discharge lifespan.

The first amorphous carbon and the second amorphous carbon may be at least one selected from the group consisting of acetylene black, Super P black, carbon black, Denka black, activated carbon, graphite, hard carbon, and soft carbon, but are not limited thereto.

In one embodiment, the protective layer (30) may include a binder. The binder may be an aqueous binder, and the aqueous binder may be at least one selected from a rubber-based binder selected from the group consisting of acrylonitrile-butadiene rubber, styrene-butadiene rubber (SBR), and acrylic rubber, and a polymer resin selected from the group consisting of hydroxyethyl cellulose, carboxymethyl cellulose, and polyvinylidene fluoride, but is not limited thereto.

Here, the binder may be added in an amount of 1 part by weight to 15 parts by weight, specifically 3 parts by weight to 10 parts by weight, based on the weight of a slurry formed by mixing the first amorphous carbon and/or the second amorphous carbon and water. When the content of the binder satisfies the above range, the particles constituting the protective layer can be efficiently bound without causing reduction in battery energy density due to an increase in weight and volume, thereby forming a protective layer having excellent performance and further improving lifespan characteristics of a secondary battery.

When the content of the binder is excessively smaller than the above range, there is a problem in that bonding force between particles is reduced in forming the protective layer. When the content of the binder is excessively larger than the above range, not only is energy density reduced, but resistance of the protective layer is greatly increased, thereby interfering with lithium ion conduction.

In one embodiment, the protective layer (30) may have a thickness of 0.01 µm to 50 µm. Specifically, the protective layer (30) may have a thickness in a range of 1 µm to 20 µm. When the thickness of the protective layer satisfies the above-described range, the amorphous carbon prevents lithium dendrites from being formed on the surface of the protective layer, and allows lithium ions to be well conducted through the inside of the protective layer, whereby lithium can be deposited on a lower surface of the protective layer.

When the protective layer is excessively thin, there is a problem in that the protective layer cannot serve as a protective layer. When the protective layer is excessively thick, resistance of the protective layer is excessively large, which may cause an increase in overvoltage during operation of a secondary battery, and there is a problem in that energy density of the battery is reduced due to an increase in weight and volume. However, the thickness of the protective layer may be variably adjusted depending on the design of the secondary battery structure.

In one embodiment, the lithium metal electrode may include a film layer disposed in at least a portion of the inside of the protective layer (30), between the metal layer (12) and the protective layer (30), and on the protective layer (30). Specifically, the film layer may be disposed in at least a portion of the inside of the protective layer (30), may be disposed between the metal layer (12) and the protective layer (30), may be disposed simultaneously inside the protective layer (30) and between the metal layer (12) and the protective layer (30), or may be disposed on the protective layer (30).

The film layer is formed by, for example, a reaction between lithium metal of the electrodeposited lithium supply source (40) and a plating solution during manufacture of the metal layer (12), and a thickness, composition, characteristics, and the like of the film layer can be controlled by controlling the composition of the plating solution used and conditions of the electrodeposition process.

In one embodiment, the film layer may include at least a portion of LiF. LiF may be formed because at least one solvent among a plurality of solvents used in the electrodeposition process includes a solvent having a high dielectric constant. Specifically, a sufficient LiF film may be formed inside and/or on the surface of the protective layer by increasing a salt decomposition dissociation degree of the solvent of the plating solution for electrodeposition, suppressing a salt decomposition reaction during electrodeposition, and promoting a solvent decomposition reaction. By including the film layer including at least a portion of LiF, lifespan can be improved and dendrite growth can be prevented during battery operation due to high ionic conductivity.

The film layer may have a thickness of 2 nm to 2 µm. Specifically, the film layer may have a thickness in a range of 10 nm to 500 nm. When the film layer is excessively thick, lithium ion conductivity decreases and interfacial resistance increases, thereby causing deterioration of charge/discharge characteristics when applied to a battery. When the film layer is excessively thin, the film layer may be easily lost in a process of applying the lithium metal electrode according to the embodiment to a battery. Accordingly, the film layer may have a thin thickness and may be uniformly and densely formed on the entire surface of the metal layer (12) and the protective layer (30) within the above thickness range.

Referring to FIG. 1B, in one embodiment, the lithium metal electrode (100) includes the current collector (11) and the metal layer (12) positioned on at least one surface of the current collector (11) and configured by mixing lithium and a lithium alloy. Here, the lithium alloy may be formed by applying current between the current collector (11) and the lithium supply source (40), thereby alloying a lithiophilic component included in the coating layer (20 of FIG. 2) formed on the current collector (11) with lithium deposited from the lithium supply source (40).

The metal layer (12) may include a lithiophilic metal. A detailed description thereof may refer to FIG. 1A. In one embodiment, the metal layer (12) includes the lithiophilic metal. When the metal layer (12) including the lithiophilic metal is formed as described above, free energy of nucleation can be lowered at the initial stage of nucleation of lithium particles in the electrodeposition process, and thus a lithium metal layer having a coarse particle structure can be formed even under high-current and overvoltage conditions.

In one embodiment, the metal layer (12) includes the protective layer (30) positioned on the surface of the metal layer (12), and may include a film layer inside and/or on the surface of the protective layer (30). Detailed descriptions of the protective layer (30) and the film layer may refer to the descriptions provided above with reference to FIG. 1A.

FIG. 2 is a schematic view of a method for manufacturing a lithium metal electrode of the present invention.

Referring to FIG. 2, a method for manufacturing a lithium metal electrode according to one embodiment includes preparing a current collector (11), forming a coating layer (20) on at least one surface of the current collector (11) using a coating composition including a lithiophilic component, forming a protective layer (30) on a surface of the coating layer (20) using a slurry including amorphous carbon, positioning, in a plating solution (50), the current collector (11) on which the coating layer (20) and the protective layer (30) are formed, then positioning a lithium supply source (40) at a predetermined distance from the protective layer (30), and applying current between the current collector and the lithium supply source (40) to form a metal layer including a lithium alloy in which the lithiophilic component included in the coating layer and lithium deposited from the lithium supply source (40) are alloyed.

In the step of preparing the current collector (11), the current collector (11) may use a material having electrical conductivity and limited reactivity with lithium. Specifically, as a material of the current collector (11), for example, one of copper, nickel, titanium, stainless steel, iron, gold, platinum, silver, tantalum, ruthenium, alloys thereof, carbon, a conductive polymer, and composite fibers in which a conductive layer is coated on a non-conductive polymer, or a combination thereof, may be used.

The step of forming the coating layer (20) on at least one surface of the current collector (11) using the coating composition including the lithiophilic component may coat an alloy material on at least one surface of the current collector. The alloy material may include, for example, at least one lithiophilic metal selected from the group consisting of In, Ag, Sn, Zn, Si, Al, and Bi, but is not limited thereto.

In one embodiment, the step of forming the coating layer (20) may be performed using at least one method among electrolytic plating, electroless plating, sputtering, electron beam deposition, and thermal vapor deposition. For example, the step of forming the coating layer may be performed by an electroless plating method.

The protective layer (30) may be formed on the surface of the coating layer (20) using a slurry including amorphous carbon. The protective layer (30) may be formed by applying a slurry formed by mixing the amorphous carbon and a binder with water using at least one method selected from a doctor blade method, a dipping method, a reverse roll method, a direct roll method, a gravure method, an extrusion method, and a brush coating method. The protective layer (30) may further include a binder.

In one embodiment, the step of forming the protective layer (30) may include forming the protective layer by including first amorphous carbon having a high specific surface area. Specifically, the amorphous carbon may have a specific surface area of 450 m²/g or more. Specific features of the first amorphous carbon may refer to the descriptions of FIGS. 1A and 1B described above.

In one embodiment, the step of forming the protective layer (30) may further include mixing second amorphous carbon having a lower specific surface area than the first amorphous carbon. In the step of forming the protective layer (30), by mixing the first amorphous carbon and the second amorphous carbon having different specific surface areas, small particles effectively fill spaces between large particles, thereby improving density of the protective layer, and micropores and mesopores are appropriately mixed. A specific description of the second amorphous carbon may refer to the descriptions of FIGS. 1A and 1B described above.

In one embodiment, in the step of forming the protective layer (30), based on 100 wt% of amorphous carbon in the protective layer, specifically, based on 100 wt% of the total amount of the first amorphous carbon and the second amorphous carbon, 50 wt% or more of the first amorphous carbon may be mixed, and the balance of the second amorphous carbon may be mixed. A detailed description thereof may refer to FIGS. 1A and 1B described above.

Meanwhile, in the step of forming the protective layer (30), the protective layer formed on the surface of the alloy material coating layer may have a thickness of 0.01 µm to 50 µm, and more specifically 1 µm to 20 µm.

After the step of forming the protective layer (30), a step of positioning, in the plating solution (50), the current collector on which the coating layer (20) and the protective layer (30) are sequentially formed, then positioning a lithium supply source (40) at a predetermined distance from the current collector (11), and a step of applying current between the current collector (11) and the lithium supply source (40) to form the metal layer (12) are performed.

Specifically, after the current collector (11) on which the coating layer (20) and the protective layer (30) are formed is positioned in the plating solution, the lithium supply source (40) is positioned at a predetermined distance from the protective layer (30). As the lithium supply source (40), for example, lithium metal, a lithium alloy, a foil obtained by pressing the lithium metal or the lithium alloy onto a current collector, a plating solution in which a lithium salt is dissolved, or the like may be used.

The plating solution (50) may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

Specifically, in the present embodiment, the plating solution (50) is characterized by including the lithium salt and a nitrogen-based compound as at least one of the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as the lithium salt.

Among the nitrogen-based compounds, at least one of ε-caprolactam, N-methyl-ε-caprolactam, triethylamine, and tributylamine may be used as a non-aqueous solvent.

The plating solution (50) may be prepared using only the nitrogen-based compound, but may include a general non-aqueous solvent as an auxiliary solvent in consideration of viscosity or the like of the plating solution (50).

The auxiliary solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In one embodiment, the auxiliary solvent may be included in an amount of 5 wt% to 70 wt%, preferably 10 wt% to 60 wt%, based on 100 wt% of the entire plating solution (50), but is not limited thereto. However, when the auxiliary solvent is included within the above range, viscosity of the plating solution (50) is appropriate, and thus time required for the process of forming the metal layer (12) can be shortened, but the present invention is not limited thereto.

In one embodiment, the plating solution (50) may further include a fluorine-based compound. When the plating solution (50) further includes the fluorine-based compound, there is an advantage in that characteristics of the film layer formed on the lithium metal layer (12) can be improved.

The fluorine-based compound may include, for example, one or more selected from the group consisting of lithium difluorophosphate, lithium hexafluorophosphate, lithium difluoro bisoxalato phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The fluorine-based compound may be included in an amount of 0.1 wt% to 30 wt%, preferably 1 wt% to 20 wt%, and more preferably 1 wt% to 10 wt%, based on 100 wt% of the entire plating solution (50). When the fluorine compound is included within the above range, interaction between the nitrogen-based compound and the fluorine-based compound in the plating solution (50) is smooth, and thus an effect of improving characteristics of the film layer formed on the lithium metal layer (12) is excellent. In addition, excessive generation of LiF due to a direct reaction between the fluorine-based compound and lithium is suppressed, thereby providing excellent electrochemical characteristics.

Next, after an insulating film is positioned between the current collector (11) and the lithium supply source (20), the current collector (11), the lithium supply source (20), and the insulating film may be stacked and restrained from both directions using a restraining device. As the restraining device, as non-limiting examples, methods generally used in the art, such as a manual clamping method and a uniaxial pressing method using hydraulic pressure or pneumatic pressure, may be used.

In the step of applying the current to form the lithium metal layer on at least one surface of the current collector, the current density of the applied current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In one embodiment, a time for applying the current may be in a range of 0.05 hours to 50 hours, and more specifically 0.25 hours to 25 hours.

In one embodiment, the step of applying the current to form the lithium metal layer on at least one surface of the current collector may be performed at least once at different current densities. The step of applying current may be performed in multiple stages. Specifically, the step of applying current in multiple stages may be performed by increasing the current density stepwise from a low current density to a high current density for predetermined time periods. For example, the step of applying current may be performed by increasing stepwise and electrodepositing in the order of 0.1 mA/cm² to 0.3 mA/cm², 0.3 mA/cm² to 0.7 mA/cm², and 0.8 mA/cm² to 1.5 mA/cm².

In one embodiment, the step of applying current to form the lithium metal layer (12) on at least one surface of the current collector (11) may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can deposit lithium between the protective layer (30) and the current collector (11).

The step of electrodepositing at the maximum current density may be, for example, a step finally performed after a step of depositing in multiple stages for lithium deposition between the current collector (11) and the protective layer (30). When the maximum current density satisfies the above-described range, lithium is appropriately deposited between the current collector (11) and the protective layer (30), thereby providing excellent lifespan characteristics of the battery and excellent bonding strength between the current collector (11) and the protective layer (30).

When the maximum current density is outside the upper limit of the above-described range, since lithium is deposited on the surface of the protective layer (30), there is a problem in that a target stabilized electrode structure cannot be secured. When the maximum current density is outside the lower limit of the above-described range, there is a problem of reduced productivity because the time for electrodepositing lithium increases.

In one embodiment, the step of applying the current to form the lithium metal layer on at least one surface of the current collector may include electrodepositing the deposited lithium to have a thickness in a range of 5 µm to 15 µm. Specifically, the deposited lithium may be electrodeposited to have a thickness in a range of 8 µm to 12 µm. The thickness of the deposited lithium may mean a height in a vertical direction of lithium disposed between the current collector (11) and the protective layer (30).

When the thickness of the deposited lithium is outside the upper limit of the above-described thickness, not only does the energy density of the battery decrease, but process time and the amount of metal raw material used increase when forming the metal layer. When the thickness of the deposited lithium is outside the lower limit of the above-described thickness, initial coulombic efficiency decreases due to initial irreversibility, and surplus lithium is insufficient, thereby deteriorating charge/discharge performance.

In one embodiment, in the step of applying current to form the lithium metal layer (12) on at least one surface of the current collector (11), the thickness of the metal layer (12) including the lithium alloy may be controlled to 1 µm to 100 µm. A detailed description of the thickness of the metal layer (12) may refer to the descriptions of FIG. 1 described above.

As described above, in the present embodiment, even under a high-current condition, excessive generation of fine lithium particles is prevented, initially generated lithium particles are induced to grow well, and thus a lithium metal electrode (100) having a metal layer including the lithium metal layer (12) having a coarse particle structure can be manufactured. In addition, the metal layer manufactured as described above also has excellent surface uniformity.

A lithium secondary battery according to still another embodiment of the present invention includes a positive electrode, a negative electrode, and an electrolyte positioned between the positive electrode and the negative electrode. Here, the negative electrode may be the lithium metal electrode according to the present invention.

In one embodiment, the lithium secondary battery may include an electrode assembly including a positive electrode including a positive electrode active material, a negative electrode that is the lithium metal electrode of the present invention, and a separator disposed between the positive electrode and the negative electrode. Such an electrode assembly may be wound or folded and accommodated in a battery case.

Thereafter, an electrolyte may be injected into the battery case and sealed, thereby completing the secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce and at least one non-metal element selected from the group consisting of O, F, S, P, and combinations thereof.

In one embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, aluminum foil, nickel foil, or a combination thereof may be used, but the positive electrode current collector is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte obtained by impregnating an electrolyte solution into a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be selected from, for example, glass fiber, polyester, polyethylene, polypropylene, polytetrafluoroethylene, or a combination thereof, and may be in a nonwoven or woven fabric form. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Manufacture of Negative Electrode for Lithium Secondary Battery

### <Example 1>

### <Manufacture of Current Collector>

A current collector of Cu foil was prepared for use in a negative electrode for a lithium secondary battery of the present invention.

### <Formation of Alloy Material Coating Layer>

Thereafter, an alloy material was coated on both surfaces of the current collector by an electroplating method. Specifically, the alloy material was coated on both surfaces of the copper foil current collector by an electroless plating method. Silver (Ag) was used as the alloy material, and the plating thickness was controlled to about 300 nm.

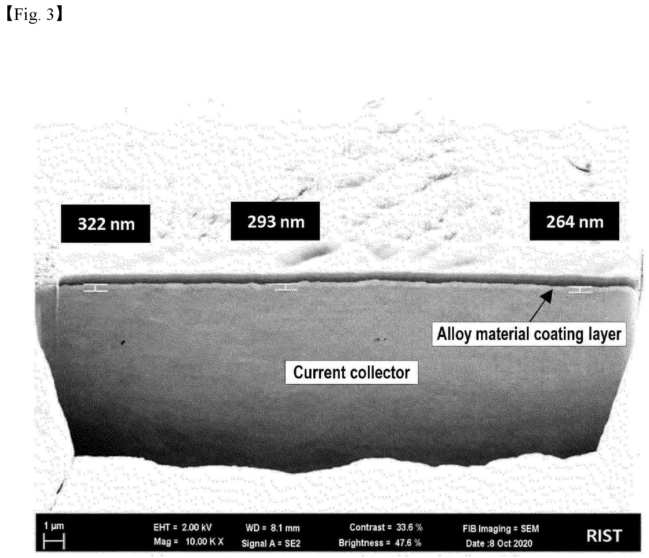

FIG. 3 is a scanning electron microscope (SEM) photograph showing a structure and a thickness of an alloy material coating layer plated on a current collector according to one embodiment of the present invention.

Referring to FIG. 3, it can be confirmed that the alloy material coating layer plated on the current collector of the present invention has a thickness in a range of about 250 nm to 350 nm.

### <Formation of Protective Layer>

Thereafter, a protective layer having a thickness of about 5 µm was formed on an upper surface of the coating layer by slurry coating using a comma coater. Specifically, the protective layer was formed by mixing amorphous carbon, a binder, and a solvent. At this time, as the binder, carboxymethyl cellulose (CMC) and styrene-butadiene rubber (SBR) were added in amounts of 3.0 parts by weight and 6.0 parts by weight, respectively, based on 100 parts by weight of amorphous carbon. In addition, as the solvent, a solvent was used such that water and ethylene glycol (EG) were in a weight ratio of 80:20. The total amount of the solvent was maintained at about 25 wt% based on the total amount of the amorphous carbon and the binder to maintain viscosity appropriate for coating.

As the amorphous carbon, a high-specific-surface-area microparticle, L1102 model manufactured by Heraeus, was used, and the powder had a median particle diameter D50 of 0.8 µm and a specific surface area of 600 m²/g.

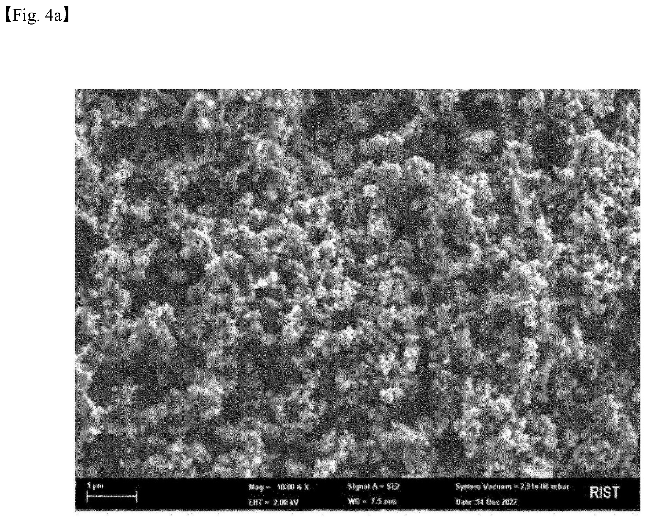

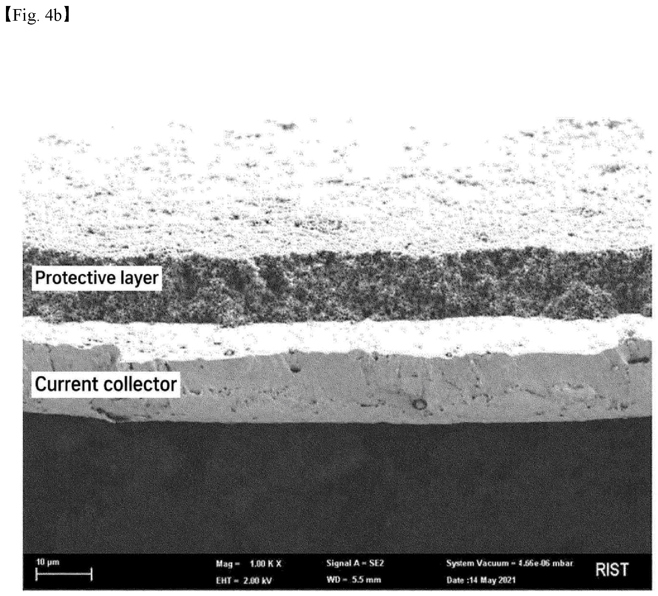

FIGS. 4A and 4B show surface and cross-sectional microstructures when a protective layer is disposed on a current collector coated with an alloy material.

Referring to FIGS. 4A and 4B, after the solvent was volatilized, the protective layer had a porous surface structure and cross-sectional shape, and such a porous structure allows the plating solution to be smoothly impregnated in a subsequent lithium electrodeposition process, thereby facilitating movement and electrodeposition of lithium ions.

### <Lithium Electrodeposition Process>

Thereafter, in order to form a lithium alloy or pure lithium metal between the protective layer and the current collector, lithium was detached from a lithium supply source using an electrodeposition process and deposited between the protective layer and the current collector. The plating solution used for such electrodeposition was prepared by adding lithium bis(fluorosulfonyl)imide and lithium nitrate, which are nitrogen-based compounds, in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution, to 1,2-dimethoxyethane (DME) as a solvent. As the lithium supply source (40), a lithium metal plate having a thickness of 500 µm and a purity of 99.9% or more was used by being pressed onto a copper current collecting plate (Cu plate).

After the lithium supply source and the current collector were stacked in the plating solution while being electrically insulated, lithium was deposited between the current collector and the ion-concentrating protective layer by applying current using a power supply device, with the lithium supply source and the current collector as (+) and (-) electrodes, respectively.

The current density of the electrodeposition process was increased stepwise in the order of 0.2 mA/cm², 0.5 mA/cm², and 1 mA/cm², and electrodeposition was performed for 5 minutes at each current density, followed by a maximum current density of 10 mA/cm². The electrodeposition time at the maximum current density was variably set according to the magnitude of the maximum current density by calculating a time at which a final accumulated lithium thickness of 10 µm could be electrodeposited.

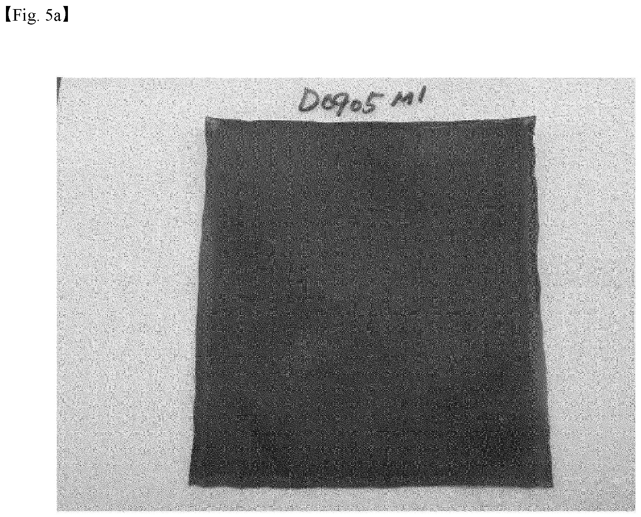

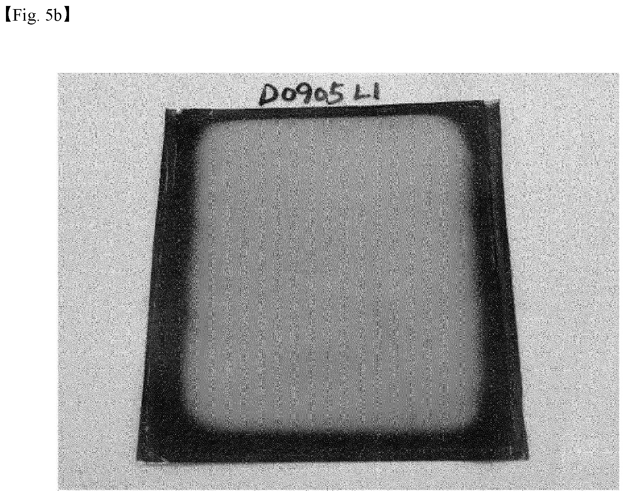

FIGS. 5A and 5B show electrodeposition appearances according to maximum current density in electrodeposition processes according to Examples and Comparative Examples.

FIG. 5A shows an electrodeposition appearance when electrodeposition was performed at a current density equal to or lower than the maximum current density, and FIG. 5B shows an electrodeposition appearance when electrodeposition was performed at a current density exceeding the maximum current density. Referring to FIGS. 5A and 5B, it was confirmed that, when electrodeposition was performed at a current density equal to or lower than an electrodepositable maximum current density, deposited lithium was stacked under the black protective layer, and thus the black protective layer was visible in appearance. When electrodeposition was performed at a current density exceeding the electrodepositable maximum current density, it was confirmed that lithium was stacked on an upper surface of the protective layer and gray lithium was electrodeposited on the upper surface of the protective layer. Through this, the maximum current density was defined as an electrodepositable maximum current density at which lithium is deposited between the current collector and the protective layer in the electrodeposition process.

### <Comparative Example 1>

The same process as in Example 2 was performed, except that, in the step of forming the protective layer, based on 100 wt% of the amorphous carbon, the high-specific-surface-area microparticulate amorphous carbon used in Example 1 was not included at all, and 100 wt% of low-specific-surface-area nanoparticulate amorphous carbon (second amorphous carbon) was used.

### Manufacture of All-Solid-State Battery

All-solid-state batteries were manufactured by applying the negative electrodes manufactured according to the above-described Examples and Comparative Examples, and charge/discharge lifespan was evaluated. For evaluation of the all-solid-state battery cells, a pressure-type dedicated evaluation cell manufactured by Tera Leader, which can maintain an inert atmosphere, was used. For manufacturing the all-solid-state battery cell, a sulfide-based argyrodite (Li₆PS₅Cl) solid electrolyte was used as an electrolyte, and the electrolyte was formed in a pellet form to have a thickness of about 0.7 mm. In order to secure a dense electrolyte, the electrolyte was pressurized at a pressure of 370 MPa.

Lithium having a thickness of 0.5 mm was attached to one surface of the electrolyte as a reference electrode, and the negative electrode manufactured according to the Examples and Comparative Examples was attached to the opposite surface. The reference electrode and the evaluation electrode were attached to the solid electrolyte at a pressure of 50 MPa, and during charge/discharge evaluation, the dedicated evaluation cell was pressurized at 16 MPa.

### <Evaluation Example 1>: Performance Evaluation According to Difference in Specific Surface Area of Amorphous Carbon

Table 1 below shows the maximum electrodeposition current and the number of charge/discharge performance cycles when amorphous carbon having different specific surface areas was included in forming the protective layer. The maximum electrodeposition current, the number of charge/discharge performance cycles, the specific surface area of the amorphous carbon, and the average particle diameter (D50) were measured by the following methods.

Maximum current density (mA/cm²): The maximum current density means a limit of current density at which lithium electrodeposited according to the above process can deposit lithium between the ion-concentrating protective layer and the current collector, and the maximum current density was measured.

Number of charge/discharge performance cycles: The reference electrode and the evaluation electrode were attached to the solid electrolyte at a pressure of 50 MPa, and during charge/discharge evaluation, the dedicated evaluation cell was pressurized at 16 MPa. The charge/discharge evaluation was performed by defining one cycle as charging at a constant current of 2 mA/cm² for 0.5 hours and discharging at a constant current of 2 mA/cm² for 0.5 hours. The charge/discharge lifespan was defined as being ended when a short circuit occurred between the reference electrode and the evaluation electrode during charging/discharging or when a voltage between both electrodes exceeded 2 V.

Specific surface area (m²/g) and micropore fraction (%): BET measurement of the amorphous carbon in the protective layer and pore distribution were measured by a nitrogen adsorption method using a 3Flex apparatus manufactured by Micromeritics.

**[Table 1]**

| Classification | First Amorphous Carbon | Second Amorphous Carbon | Specific Surface Area (m²/g) | Micropore Fraction (%) | Average Particle Size (µm) | Maximum Electrodeposition Current (mA/cm²) | Number of Charge/Discharge Performance Cycles |
|---|---|---|---|---|---|---|---|
| | Content (wt%) | Content (wt%) | | | | | |
| Example 1 | 100 | - | 600 | 30 | 0.8 | 12 | 1044 |
| Comparative Example 1 | - | 100 | 60 | 0 | 0.03 | 4 | 481 |

Referring to Table 1, it was confirmed that Example 1, which included, as the protective layer, the first amorphous carbon having a large specific surface area and a large average particle diameter D50, was superior in maximum electrodeposition current and number of charge/discharge performance cycles compared with Comparative Example 1, which included, as the protective layer, the second amorphous carbon having a small specific surface area and a small average particle diameter D50.

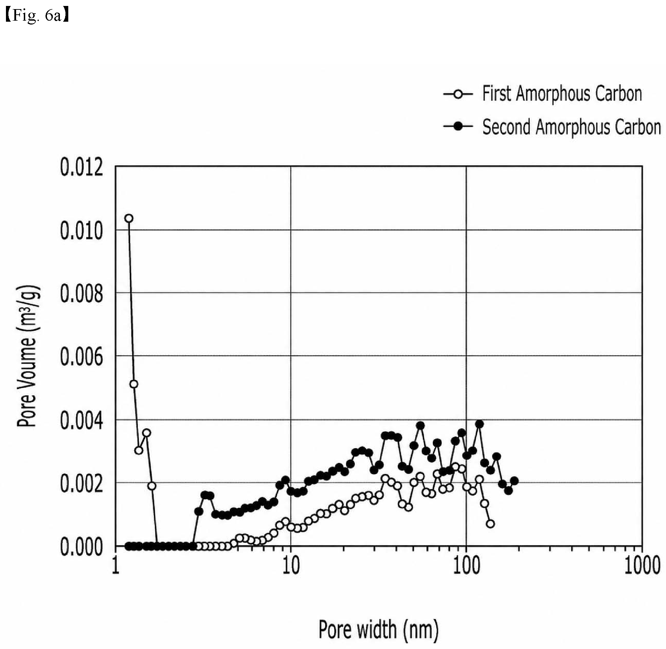

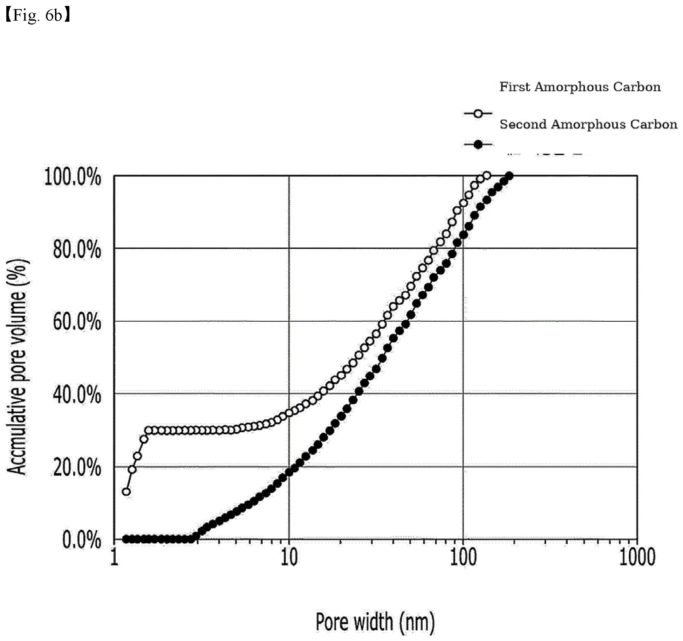

FIGS. 6A and 6B show the specific surface area, pore size, and cumulative distribution of amorphous carbon according to Examples and Comparative Examples of the present invention.

FIGS. 6A and 6B show the specific surface area, pore size, and cumulative distribution of each of the first amorphous carbon and the second amorphous carbon used in Example 1 and Comparative Example 1 of the present invention, respectively. Referring to FIGS. 6A and 6B, the first amorphous carbon includes a large amount of fine pores of 2 nm or less, which are generally collectively referred to as micropores. Based on the total pore volume, 30% of the volume is occupied by micropores of 2 nm or less. Because a large amount of micropores is included as described above, the specific surface area is high, such as 600 m²/g.

When the shape of particles is not considered, it is generally true that a large particle size provides a small specific surface area, and a small particle size provides a large specific surface area. However, the first amorphous carbon has a relatively large particle size at a µm level and a very high specific surface area of about 600 m²/g. This is because one particle itself is composed of very small micropores.

In contrast, the second amorphous carbon has a very small particle size of about 30 nm, but has a low specific surface area of about 60 m²/g. This is because there are almost no micropores formed in the particles themselves, and mesopores (2 nm to 50 nm) or macropores (greater than 50 nm) formed between particles are mainly formed. In the case of the second amorphous carbon, it was confirmed that the fraction of micropores of 2 nm or less was very low, at a level of 0%.

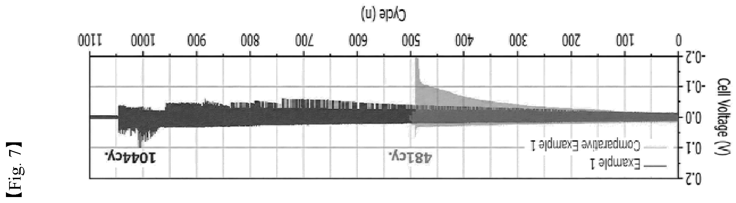

FIG. 7 shows charge/discharge lifespan evaluation results of lithium metal electrodes according to Examples and Comparative Examples of the present invention.

Referring to FIG. 7, it was confirmed that Example 1 including the first amorphous carbon having a high specific surface area exhibited excellent lifespan characteristics of 1044 cycles, compared with 481 cycles of Comparative Example 1 including the second amorphous carbon having a low specific surface area.

### <Evaluation Example 2> - Control of Contents of First Amorphous Carbon and Second Amorphous Carbon

### <Example 2>

The same process as in Example 1 was performed, except that, in the step of forming the protective layer, 80 wt% of the high-specific-surface-area microparticulate amorphous carbon (first amorphous carbon) used in Example 1 and 20 wt% of low-specific-surface-area nanoparticulate amorphous carbon (second amorphous carbon) were mixed, based on 100 wt% of the amorphous carbon.

At this time, the low-specific-surface-area nanoparticulate amorphous carbon may have an average particle diameter D50 of 30 nm and a specific surface area of 60 m²/g.

### <Example 3>

The same process as in Example 2 was performed, except that, in the step of forming the protective layer, 60 wt% of the high-specific-surface-area microparticulate amorphous carbon (first amorphous carbon) used in Example 1 and 40 wt% of low-specific-surface-area nanoparticulate amorphous carbon (second amorphous carbon) were mixed, based on 100 wt% of the amorphous carbon.

### <Comparative Example 2>

The same process as in Example 2 was performed, except that, in the step of forming the protective layer, 40 wt% of the high-specific-surface-area microparticulate amorphous carbon (first amorphous carbon) used in Example 1 and 60 wt% of low-specific-surface-area nanoparticulate amorphous carbon (second amorphous carbon) were mixed, based on 100 wt% of the amorphous carbon.

Table 2 below shows the maximum electrodeposition current and the number of charge/discharge performance cycles when the contents of the first amorphous carbon and the second amorphous carbon were changed.

**[Table 2]**

| Classification | First Amorphous Carbon | Second Amorphous Carbon | Specific Surface Area (m²/g) | Micropore Fraction (%) | Average Particle Size (µm) | Maximum Electrodeposition Current (mA/cm²) | Number of Charge/Discharge Performance Cycles |
|---|---|---|---|---|---|---|---|
| | Content (wt%) | Content (wt%) | | | | | |
| Example 2 | 80 | 20 | 490 | 21.5 | 0.65 | 10 | 948 |
| Example 3 | 60 | 40 | 380 | 14.7 | 0.49 | 10 | 902 |
| Comparative Example 2 | 40 | 60 | 270 | 9.0 | 0.34 | 6 | 613 |

Referring to Table 2, when the protective layer included both the first amorphous carbon and the second amorphous carbon, it was confirmed that Examples 2 and 3, in which the content of the first amorphous carbon was greater than the content of the second amorphous carbon, were superior in maximum electrodeposition current and number of charge/discharge performance cycles compared with Comparative Example 2.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode, comprising:
a current collector;
a metal layer positioned on at least one surface of the current collector and comprising a lithium alloy; and
a protective layer positioned on the metal layer and comprising first amorphous carbon having a specific surface area of 450 m²/g or more.

2. The lithium metal electrode of claim 1,
wherein the first amorphous carbon has an average particle diameter D50 of 0.1 µm to 1.5 µm.

3. The lithium metal electrode of claim 1,
wherein the protective layer further comprises second amorphous carbon having a lower specific surface area than the first amorphous carbon, and
wherein, based on 100 wt% of amorphous carbon in the protective layer, the first amorphous carbon is 50 wt% or more, and a balance comprises the second amorphous carbon.

4. The lithium metal electrode of claim 3,
wherein the second amorphous carbon has a specific surface area of 40 m²/g to 80 m²/g or less.

5. The lithium metal electrode of claim 3,
wherein the second amorphous carbon has an average particle diameter D50 of 20 nm to 50 nm.

6. The lithium metal electrode of claim 3,
wherein a difference value between the specific surface area of the first amorphous carbon and the specific surface area of the second amorphous carbon is 400 m²/g to 700 m²/g.

7. The lithium metal electrode of claim 1,
wherein the first amorphous carbon in the protective layer comprises micropores.

8. The lithium metal electrode of claim 7,
wherein the micropores are 10% to 40% based on 100% of a total pore volume.

9. The lithium metal electrode of claim 1,
wherein the second amorphous carbon in the protective layer comprises mesopores or macropores.

10. A method for manufacturing a lithium metal electrode, comprising:
preparing a current collector;
forming a coating layer on at least one surface of the current collector using a coating composition comprising a lithiophilic component; and
forming, on a surface of the coating layer, a protective layer comprising first amorphous carbon having a specific surface area of 450 m²/g or more.

11. The method for manufacturing a lithium metal electrode of claim 10,
further comprising, after forming the protective layer:
positioning, in a plating solution, the current collector on which the coating layer and the protective layer are formed, and then positioning a lithium supply source at a predetermined distance from the protective layer; and
applying current between the current collector and the lithium supply source to form a metal layer comprising a lithium alloy in which the lithiophilic component included in the coating layer and lithium deposited from the lithium supply source are alloyed.

12. The method for manufacturing a lithium metal electrode of claim 10,
wherein, in forming the protective layer, the first amorphous carbon has an average particle diameter D50 of 0.1 µm to 1.5 µm.

13. The method for manufacturing a lithium metal electrode of claim 11,
wherein, in forming the protective layer, second amorphous carbon having a lower specific surface area than the first amorphous carbon is further mixed, and
wherein, based on 100 wt% of amorphous carbon in the protective layer, the first amorphous carbon is 50 wt% or more, and a balance of the second amorphous carbon is mixed.

14. The method for manufacturing a lithium metal electrode of claim 13,
wherein the second amorphous carbon has a specific surface area of 40 m²/g to 80 m²/g or less.

15. The method for manufacturing a lithium metal electrode of claim 13,
wherein the second amorphous carbon has an average particle diameter D50 of 20 nm to 50 nm.
